# EUROPÄISCHE PATENTSCHRIFT

(11) **EP 2 165 765 B1**
(45) Veröffentlichungstag und Bekanntmachung des Hinweises auf die Patenterteilung: **15.02.2012**
(21) Anmeldenummer: 09011655.9
(22) Anmeldetag: 11.09.2009
(51) Int. Cl.: B01L 3/02

(54) **Pipettiervorrichtung mit Doppelgewinde**
Pipette device with double thread
Dispositif de pipetage avec filetage double

(30) Priorität: 12.09.2008 DE 102008048252; 16.09.2008 US 97393 P
(43) Veröffentlichungstag der Anmeldung: 24.03.2010
(73) Patentinhaber: EPPENDORF AG, 22339 Hamburg (DE)
(72) Erfinder: Wilmer, Jens, 22926 Ahrensburg (DE)
(74) Vertreter: Hauck Patent- und Rechtsanwälte

(56) Entgegenhaltungen:
- EP-A- 1 514 600
- EP-A- 1 598 113
- EP-A- 1 743 701
- WO-A-92/13638

## Beschreibung

Die Erfindung bezieht sich auf eine Pipettiervorrichtung mit Mitteln zum lösbaren Verbinden mit mindestens einer Pipettenspitze, mindestens einer Verdrängungseinrichtung, einer Antriebseinrichtung zum Antreiben eines Verdrängungsorgans der Verdrängungseinrichtung und einer Einstelleinrichtung mit einer Spindelmut-ter und einer Gewindespindel zum Einstellen des Dosiervolumens.

Pipettiervorrichtungen werden insbesondere im Labor zur Dosierung von Flüssigkeiten verwendet. Die Flüssigkeiten werden in Pipettenspitzen aufgenommen und ausgegeben. Bei Luftpolsterpipetten ist eine Verdrängungseinrichtung für ein Gas in die Pipettiervorrichtung integriert und kommunizierend mit mindestens einer Pipettenspitze verbunden. Mittels der Verdrängungseinrichtung wird ein Luftpols-ter verlagert, so dass Flüssigkeit in die Pipettenspitze eingesogen und daraus ausgestoßen wird. Die Verdrängungseinrichtung ist vielfach ein Zylinder mit einem darin verlagerbaren Kolben. Die Mittel zum lösbaren Verbinden mit mindestens einer Pipettenspitze sind beispielsweise als Aufsteckkonus oder Sackbohrung ausgeführt. Ein Loch in der Stirnseite des Aufsteckkonus bzw. im Boden der Sackbohrung ist mit einer Verdrängungskammer der Verdrängungseinrichtung verbunden.

Die Pipettenspitzen werden lösbar mit der Pipettiervorrichtung verbunden, damit sie nach Gebrauch gegen frische Pipettenspitze ausgetauscht werden können. Hierdurch können bei nachfolgenden Dosierungen Kontaminationen vermieden werden. Pipettenspitzen für den einmaligen Gebrauch sind kostengünstig aus Kunststoff verfügbar.

Das mittels der Pipettiervorrichtung aufgenommene und abgegebene Dosiervolumen der Flüssigkeit ist mittels der Einstelleinrichtung einstellbar. Zum Einstellen des Dosiervolumens wird der Hub verändert, den der Kolben im Zylinder aus-führt. Hierzu wird ein Anschlag verlagert, der mit einem Gegenanschlag an einer den Kolben verlagernden Hubstange zusammenwirkt, um den Hub der Hubstange zu begrenzen. Der Anschlag ist an der Stirnseite einer Gewindespindel angeord-net, die in einer bezüglich der Verdrängungskammer feststehenden Spindelmutter schraubbar und durch die die Hubstange hindurchgeführt ist. Der Gegenanschlag ist eine radial von der Hubstange vorstehende Ringscheibe bzw. Wulst. Am ande-ren Ende ist der Hub durch einen weiteren Anschlag begrenzt, der mit der Wulst an der Hubstange oder dem Kolben zusammenwirkt.

Bei herkömmlichen Pipettiervorrichtungen werden Gewindemutter und Gewindespindel gesondert hergestellt und mit Gewinden versehen. Infolge von Fertigungstoleranzen weist die Gewindespindel ein Spiel in der Mutter auf, das zu Dosierungenauigkeiten führen kann.

Ferner gibt es Pipettiervorrichtungen, bei denen zunächst die Spindelmutter aus Kunststoff mit einer gewindelosen Bohrung hergestellt und dann das Innengewin-de der Spindelmutter durch Einschrauben einer mit einem Außengewinde verse-henen Gewindespindel aus Metall in die Bohrung geformt wird. Diese Ausführen-gen vermeiden ein Spiel zwischen Spindelmutter und Gewindespindel. Sie haben jedoch den Nachteil, dass das Einstellen der Dosiervolumina bei Pipettiervorrich-tungen unterschiedlicher Größe, die sich durch ihre Einstellbereiche der Dosiervo-lumina unterscheiden (z.B. 0,5 - 10 µ, 10 - 100 µ, 100 - 1000 µl), mit einem sehr unterschiedlichen Kraftaufwand verbunden ist. Bedingt durch die mit zunehmen-der Gewindesteigung abnehmende Gewindereibung ist nämlich der Kraftaufwand für das Einstellen des Dosiervolumens bei Pipettiervorrichtungen mit kleinem Einstellbereich größer als der Kraftaufwand für das Einstellen des Dosiervolu-mens bei Pipettiervorrichtungen mit großem Einstellbereich.

Davon ausgehend liegt der Erfindung die Aufgabe zugrunde, eine Pipettiervorrichtung zur Verfügung zu stellen, die für verschiedene Einstellbereiche leichter mit einer definierten Einstellkraft ausgeführt werden kann.

Die Aufgabe wird durch eine Pipettiervorrichtung mit den Merkmalen des Anspruchs 1 gelöst. Vorteilhafte Ausgestaltungen der Pipettiervorrichtung sind in den Unteransprüchen angegeben.

Die erfindungsgemäße Pipettiervorrichtung hat
- Mittel zum lösbaren Verbinden mit mindestens einer Pipettenspitze und mindestens eine Verdrängungseinrichtung mit einer Verdrängungskammer und einem darin beweglich angeordneten Verdrängungsorgan zum Einsaugen und Ausstoßen von Flüssigkeit in und aus der mindestens einen Pipettenspitze oder
- Mittel zum lösbaren Verbinden mit mindestens einere Spritze mit einem Zylinder und einem darin verschieblichen Kolben,
- eine Hubstange zum Antreiben des Verdrängungsorgans oder des Kolbens ei-ner Spritze,
- einem Antriebsmittel zum Antreiben der Hubstange,
- eine Einstelleinrichtung zum Einstellen des Dosiervolumens mit einer Spindelmutter und einer Gewindespindel, wobei eines der Bauteile Spindelmutter und Gewindespindel bezüglich der Verdrängungskammer odes des Zylinders der verbundenen Spritze feststeht und das andere Bauteil bezüglich des feststehenden Bauteils schraubbar ist und einen Anschlag aufweist, dem ein Gegenanschlag der Hubstange zugeordnet ist,
- wobei die Gewindespindel ein erstes Außengewinde und mindestens ein weiteres Außengewinde mit einem anders ausgeprägten Gewindeprofil als das erste Außengewinde und die Spindelmutter mindestens ein zugehöriges Innenge-winde hat oder die Spindelmutter ein erstes Innengewinde und mindestens ein weiteres Innengewinde mit einem anders ausgeprägten Gewindeprofil als das erste Außengewinde und die Gewindespindel mindestens ein zugehöriges Auβengewinde hat.
- wobei bei dem weiteren Außengewinde der Gewindespindel oder dem weiteren Innengewinde der Spindelmutter die Spindelmutter mindestens teilweise in der Höhe des Außendurchmessers und/oder Innendurchmessers des Außengewindes der Ge-windespindel in radialer Richtung zur Achse der Gewindespindel einen Abstand zur Gewindelspindel aufweist.

Bevorzugt wird das zugehörige Innengewinde der Spindelmutter oder das zugehörige Außengewinde der Gewindespindel mindestens teilweise durch Einschrauben der Ge-windespindel in die Spindelmutter oder Aufschrauben der Spindelmutter auf die Gewin-despindel hergestellt oder wurde bereits so hergestellt.

Die erfindungsgemäßen Pipettiervorrichtungen zeichnen sich dadurch aus, dass bei dem zusätzlichen, mindestens zweiten Außengewinde der Gewindespindel oder Innengewinde der Spindelmutter in der Höhe des Außendurchmessers und/oder Innen-durchmessers des Außengewindes der Gewindespindel in radialer Richtung zur Achse der Gewindespindel mindestens teilweise ein Abstand zwischen der Spindelmutter und der Gewindespindel besteht, wodurch definierte Einstellkräfte gemäß Wunsch des Nut-zers der Pipettiervorrichtung, insbesondere verringerte Einstellkräfte ermöglicht werden. Der Abstand zwischen Spindelmutter und Gewindestange sollte bevorzugt größer als 0,015 mm sein, besonders bevorzugt im Bereich von 0,020 mm bis 0,06 mm liegen.

Bei der erfindungsgemäßen Pipettiervorrichtung wird bevorzugt mindestens ein Innengewinde der Spindelmutter durch Einschrauben der mit einem ersten Auβengewinde und mindestens einem weiteren Außengewinde mit anders ausgeprägtem Gewindeprofil als das erste Außengewinde versehenen Gewindespindel oder Aufschrauben der Spindelmutter auf diese Gewindespindel erzeugt. Alternativ wird mindestens ein Außengewinde der Gewindespindel durch Einschrauben der Gewindespindel in die mit einem ersten Innengewinde und mindestens einem weiteren Innengewinde mit anders ausgeprägtem Gewindeprofil versehenen Spindelmutter oder durch Aufschrauben dieser Spindelmutter auf die Gewindespindel erzeugt. Im Folgenden wird vereinfachend grundsätzlich der Fall betrachtet, dass die Gewindespindel in die feststehende Spindelmutter eingeschraubt wird. Die Ausführungen gelten sinngemäß für den Fall des Aufschraubens der Spindelmutter auf die feststehende Gewindespindel.

Falls das Innengewinde der Spindelmutter mittels einer Gewindespindel erzeugt wird, die mit einem ersten Außengewinde und einem weiteren Außengewinde versehen ist, kann die Spindelmutter ursprünglich eine Bohrung haben, in der durch Einschrauben der Gewindespindel mindestens ein Innengewinde hergestellt wird. Ferner kann die Spindelmutter bereits mit einem teilweise vorgefertigten Innengewinde versehen sein, das durch Einschrauben der Gewindespindel fertig gestellt wird. Ferner ist es möglich, die Spindelmutter ursprünglich ohne Bohrung auszuführen und Bohrung und Innengewinde durch Einschrauben einer nach Art einer Selbstbohrschraube ausgeführten Gewindespindel herzustellen.

Falls das Außengewinde der Gewindespindel mittels einer Spindelmutter erzeugt wird, die mit einen ersten Innengewinde und mindestens einem weiteren Innengewinde versehen ist, kann die Gewindespindel ein zylindrischer Rundstab sein, an dem durch Aufschrauben der Spindelmutter mindestens ein Außengewinde hergestellt wird. Ferner kann die Gewindespindel bereits mit mindestens einem teilweise vorgefertigten Außengewinde versehen sein, das durch Aufschrauben der Spindelmutter fertig gestellt wird.

Das erste Außengewinde bzw. das erste Innengewinde kann dadurch anders ausgeprägt als das mindestens eine weitere Außengewinde bzw. das mindestens eine weitere Innengewinde sein, dass es mindestens eine verschiedene Gewindemaß und/oder eine verschiedene Gewindeform aufweist. Ein unterschiedlich ausgeprägtes Gewindemaß ist beispielsweise der Außendurchmesser und/oder der Innendurchmesser und/oder der Flankendurchmesser und/oder der Flankenwinkel und/oder die Gewindesteigung. Bevorzugt gibt es jedoch bei der Gewindesteigung keine Abweichung. Unterschiedlich ausgeprägte Gewindeformen sind beispielsweise ein Spitzgewinde, ein Trapezgewinde, ein Rundgewinde oder ein Sägezahngewinde. Die genannte Gewindekenngrößen bzw. -begriffe werden entsprechend den Festlegungen in einschlägigen Normen (z.B. ISO) für Gewinde verwendet.

Beim Einschrauben der Gewindespindel mit den vorgefertigten Außengewinden in die Spindelmutter wird in dieser mindestens ein komplementäres Innengewinde erzeugt, sodass sichergestellt ist, dass die Gewindespindel spielfrei in der Spindelmutter gehalten ist. Dementsprechend wird durch Einschrauben der Gewindespindel in eine Spindelmutter mit vorgefertigten Innengewinden auf der Gewindespindel mindestens ein komplementäres Außengewinde erzeugt, sodass die Gewindespindel spielfrei in der Spindelmutter gehalten ist. Dabei kann das erste Auβengewinde der Gewindespindel bzw. das erste Innengewinde der Spindelmutter so gewählt sein, dass die Gewindeverbindung zwischen Gewindespindel und Spindelmutter eine hinreichende Auszugsfestigkeit aufweist. Die zum Schrauben der Gewindespindel bezüglich der Spindelmutter aufzubringende Einstellkraft bzw. das dafür aufzubringende Drehmoment, hängt von der unterschiedlichen Ausprägung der Gewindeprofile des ersten Außengewindes des mindestens einen weiteren Außengewindes der Gewindespindel bzw. des ersten Innengewindes und des mindestens einen weiteren Innengewindes der Spindelmutter ab. Durch Fest-legung der unterschiedlichen Ausprägungen der besagten Außengewinde bzw. Innengewinde kann somit die Einstellkraft festgelegt werden. Hierdurch können Pipettiervorrichtungen für verschiedene Einstellbereiche der Dosiervolumina mit definierten Einstellkräften bereitgestellt werden. Insbesondere können Pipettiervorrichtungen für verschieden Einstellbereiche der Dosiervolumina so ausgeführt werden, dass sie etwa übereinstimmende Einstellkräfte haben.

Bei herkömmlichen Pipettiervorrichtungen, bei denen das Innengewinde der Spindelmutter durch Einschrauben einer mit einem Außengewinde versehenen Gewindespindel in eine gewindellose Bohrung der Spindelmutter geformt wird, könnte die Einstellkraft für das Einstellen zwar durch Dimensionierung des Außengewin-des beeinflusst werden. Die hiefür bei großen Steigungen erforderlichen Vergröβerungen der Reibflächen am Außen- und Innengewinde sind jedoch aufgrund bei geringen Durchmessern der Gewindespindel nicht möglich. Bei geringen Steigungen sind die Möglichkeiten der Beeinflussung der Einstellkräfte aufgrund der erforderlichen Verringerung der Reibflächen und dem damit einhergehendem Ver-lust an Auszugsfestigkeit begrenzt. Dem gegenüber sind bei der erfindungsgemä-βen Pipettiervorrichtung aufgrund der unterschiedlich ausgeprägten Gewindeprofile der Gewindespindel bzw. der Spindelmutter bei hinreichender Tragkraft im Wesentlichen übereinstimmende Einstellkräfte auch bei stark voneinander abweichenden Steigungen erreichbar.

Damit ist es durch Festlegung der Ausprägungen von erstem Außengewinde und mindestens einem weiteren Außengewinde bzw. von erstem Innengewinde und mindestesn einem weiteren Innengewinde möglich, das zum Einschrauben der Gewindespindel aufzubringende Drehmoment festzulegen bzw. zu reduzieren. Somit können Pipettiervorrichtungen verschiedener Größe, die sich durch ihre Einstellbereiche der Dosiervolumina unterscheiden, anwenderfreundlich mit demselben Einstellmoment ausgeführt werden. Dadurch, dass das Innengewinde der Spindelmutter bzw. das Außengewinde der Gewindespindel durch Einschrauben der Gewindespindel hergestellt wird, ist Spielfreiheit der Einstelleinrichtung und gute Dosiergenauigkeit gewährleistet.

Gemäß einer bevorzugten Ausgestaltung greift im gesamten Einstellbereich der Einstelleinrichtung zum Einstellen des Dosiervolumens das weitere Außengewin-de in das mittels der Gewindespindel hergestellte Innengewinde oder das mittels der Spindelmutter hergestellte Außengewinde in das weitere Innengewinde ein. Hierdurch ist gewährleistet, dass die Einstelleinrichtung über den gesamten Einstellbereich mit einem definierten Drehmoment einstellbar ist.

Bei einer Ausgestaltung ist die Gewindespindel oder die Spindelmutter eingängig und schließt sich das weitere Außengewinde an das erste Außengewinde oder das weitere Innengewinde an das erste Innengewinde an. Dies ist insbesondere vorteilhaft, wenn das weitere Außengewnide weniger stark ausgeprägt ist als das erste Außengewinde oder das weitere Innengewinde weniger stark ausgeprägt ist, als das erste Innengewinde. Der Querschnitt des weniger stark ausgeprägten Gewindeprofils füllt den Querschnitt des stärker ausgeprägten Gewindeprofils nur teilweise aus.

Falls das Innengewinde mittels der Gewindespindel hergestellt wird, hat dies folgende Konsequenzen: Durch Einschrauben der Gewindespindel mit dem ersten Außengewinde in die Spindelmutter wird ein zum ersten Außengewinde komplementäres Innengewinde in der Spindelmutter hergestellt. Wenn das erste Außengewinde in das Innengewinde eingreift, ist die Tragtiefe maximal, d.h. die senk-recht zur Achse der Gewindespindel gemessene Überdeckung der Flanken von Außengewinde und Innengewinde hat den Höchstwert. Wird die Gewindespindel mit dem weiteren Außengewinde in die Spindelmutter eingeschraubt, ist die Tragtiefe reduziert, weil das Gewindeprofil des weiteren Außengewindes weniger stark ausgeprägt ist. Aufgrund der verringerten Tragtiefe ist die Reibung zwischen Innengewinde und Außengewinde vermindert. Die Reibung zwischen Innengewinde und Außengewinde wird in besonderem Maße reduziert, wenn das weitere Außengewinde ein Gewindeprofil aufweist, das im Unterschied zum ersten Auβengewinde keine Spitzen hat, sodass die besonders starke Reibung an den Spit-zen des Gewindeprofils entfällt. Das zum Einschrauben der Gewindespindel aufzubringende Drehmoment kann so auf einen definierten Wert reduziert werden.

Zur Herstellung des Innengewindes kann die Gewindespindel zuerst mit dem ers-ten Außengewinde und danach mit dem weiteren Außengewinde oder zuerst mit dem weiteren Außengewinde und danach mit dem ersten Außengewinde in die Spindelmutter eingeschraubt werden. Gegebenenfalls wird das Innengewinde beim ersten Einschrauben des ersten oder weiteren Außengewindes vorgeformt und durch Einschrauben des weiteren oder ersten Außengewindes fertig gestellt.

Falls das Außengewinde mittels einer eingängigen Spindelmutter hergestellt wird, bei der das weitere Innengewinde weniger stark als das erste Innengewinde ausgeprägt ist, ist analog beim Eingreifen des Außengewindes in das erste Innengewin-de eine maximale Tragtiefe und beim Eingreifen des Außengewindes in das weite-re Innengewinde eine verminderte Tragtiefe mit entsprechenden Auswirkungen für das beim Einschrauben aufzubringende Drehmoment vorhanden.

Bei einer eingängigen Gewindespindel oder Spindelmutter kann der Einstellbe-reich der Einstelleinrichtung durch Mittel begrenzt werden, die gewährleisten, dass im Einstellbereich ausschließlich das weitere Außengewinde in das Innenge-winde oder das weitere Innengewinde in das Außengewinde eingreift. Hierbei kann es sich um in dem Gehäuse der Pipettiervorrichtung angeordnete Mittel han-deln, die den axialen Bewegungsbereich der Gewindespindel begrenzen. Diese Mittel können im Gehäuse angebracht werden, nachdem das erste Außengewinde das Innengewinde oder das erste Innengewinde das Außengewinde geformt hat. Wenn das Außengewinde durch eine eingängige Spindelmutter geformt ist, kann die Gewindespindel einen verringerten Durchmesser haben, der im Einstellbereich durch das erste Innengewinde der Spindelmutter hindurchgeführt ist, sodass dort kein Gewindeeingriff erfolgt.

Gemäß einer Ausgestaltung ist die Gewindespindel oder die Spindelmutter mehrgängig und ein erster Gewindegang des mehrgängigen Gewindes ist das erste Auβengewinde oder das erste Innengewinde und ein weiterer Gewindegang des mehrgängigen Gewindes ist das weitere Außengewinde oder das weitere Innengewinde. Beim Eindrehen einer gewindeformenden, mehrgängigen Gewindespin-del in die Spindelmutter wird darin ein mehrgängiges Innengewinde hergestellt. Das erste Außengewinde erzeugt ein erstes Innengewinde und das weitere Außengewinde ein weiteres Innengewinde. Da das Gewindeprofil des ersten Außengewindes anders ausgeprägt ist, als das Gewindeprofil des weiteren Außengewindes, ist die Reibfläche zwischen dem ersten Außengewinde und dem ersten Innengewinde größer oder kleiner als die Reibfläche zwischen dem weiteren Außengewinde und dem weiteren Innengewinde. Demzufolge ist der auf das erste Außengewinde entfallene Anteil der Einstellkraft größer oder kleiner als der auf das weitere Außengewinde entfallene Anteil. Somit kann durch Wahl der Ausprägungen der Gewindeprofile von erstem und weiterem Außengewinde das gewünschte Drehmoment realisiert werden. Insbesondere kann dies durch Variation der Ausprägung des weiteren Außengewindes unter Beibehaltung der Ausprägung des ersten Außengewindes erreicht werden. Die spielfreie Anordnung der Gewindespin-del in der Gewindemutter und eine hinreichende Auszugskraft sind ohne weiter erreichbar.

Entsprechende Auswirkungen auf die Einstellkraft bzw, das zum Einschrauben erforderliche Drehmoment ergeben sich, wenn eine Gewindespindel in eine gewindeformende, mehrgängige Spindelmutter eingedreht wird.

Gemäß einer Ausgestaltung ist das Innengewinde durch Einschrauben der Gewindespindel in eine glattzylindrische Bohrung der Spindelmutter hergestellt. Das Innengewinde wird dann vollständig durch Eindrehen der Gewindespindel in die Spindelmutter erzeugt. Bei einer analogen Ausgestaltung wird das Außengewinde der Gewindespindel durch Einschrauben eines zylindrischen Rundstabs in die gewindeformende Spindelmutter hergestellt.

Bei einer weiteren Ausgestaltung ist das Innengewinde durch Einschrauben der Gewindespindel in eine mit nach innen vorstehenden Vorsprüngen versehene Bohrung der Spindelmutter hergestellt. Infolgedessen wird das Innengewinde in den nach innen vorstehenden Vorsprüngen der Bohrung erzeugt. Das für das Her-stellen des Innengewindes aufzubringende Einschraubmoment wird hierdurch vermindert. Ferner wird die beim Einstellen zu überwindende Reibkraft zwischen Innengewinde und Außengewinde vermindert und dennoch eine gute Führung der Gewindespindel in der Spindelmutter erreicht. Bevorzugt sind die Vorsprünge nach innen vorstehender Rippen, die sich in Axialrichtung der Bohrung erstre-cken. Gemäß einer analogen Ausgestaltung wird das Außengewinde durch Ein-schrauben einer Gewindespindel mit nach außen vorstehenden Vorsprüngen in die gewindeformende Spindelmutter hergestellt. Die nach außen stehenden Vorsprün-ge erstrecken sich bevorzugt in Axialrichtung der Gewindespindel.

Gemäß einer weiteren Ausgestaltung ist das Innengewinde durch Einschrauben der Gewindespindel in eine mit einem teilweisen vorgefertigten Innengewinde versehene Bohrung hergestellt. Das teilweise vorgefertigte Innengewinde wird durch Eindrehen der Gewindespindel fertig gestellt. Die dafür erforderliche Dreh-kraft ist gegenüber einer Ausführung deutlich reduziert, bei der das Innengewinde vollständig durch Einschrauben der Gewindespindel hergestellt wird. Das teilwei-se vorgefertigte Innengewinde kann insbesondere an einer im übrigen glattzylindrischen Bohrung oder an einer mit nach innen vorstehenden Vorsprüngen versehenen Bohrung vorhanden und durch Eindrehen der Gewindespindel fertig gestellt werden. Gemäß einer analogen Ausgestaltung wird das Außengewinde durch Einschrauben einer Gewindespindel mit teilweise vorgefertigtem Außengewinde in die gewindeformende Spindelmutter hergestellt.
Durch geeignete Ausgestaltung der Gewindespindel oder der Spindelmutter kann das Innengewinde durch die Gewindespindel oder das Außengewinde durch die Spindelmutter spanend oder spanlos hergestellt sein. Bevorzugt ist es spanlos hergestellt. Zur spanenden Herstellung kann die Gewindespindel in der Art eines Gewindebohrers oder die Spindelmutter in der Art eines Außengewindeschneiders ausgeführt sein. Spanlos kann das Innengewinde oder Außengewinde mittels einer nach Art eines Gewindeformers ausgeführten Gewindespindel oder Spindelmutter hergestellt sein. Das Innen- oder Außengewinde ist bevorzugt gefurcht.

Für das erste und weitere Außengewinde und das erste und weitere Innengewinde kommen verschiedene Gewindearten in Betracht, beispielsweise Trapezgewinde, Rundgewinde oder Sägengewinde. Bevorzugt sind das erste Außengewinde oder das erste Innengewinde ein Spitzgewinde und ist das weitere Außengewinde oder das weitere Innengewinde ein Trapezgewinde.

Für die Spindelmutter und die Gewindespindel können verschiedene Materialien verwendet werden. Falls das Innengewinde mittels der Gewindespindel hergestellt wird, ist bevorzugt die Spindelmutter zumindest im Bereich des Innengewindes aus einem weicheren Material als die Gewindespindel zumindest im Bereich des Außengewindes, weil dies die Herstellung des Innengewindes erleichtert. Die Erfindung bezieht Ausgestaltungen ein, bei denen lediglich der Bereich der Spindelmutter, in dem das Innengewinde hergestellt ist, aus einem weicheren Werk-stoff besteht, als das erste und weitere Außengewinde der Gewindespindel. Ferner bezieht die Erfindung Ausgestaltungen ein, bei denen die Gewindespindel ledig-lich im Bereich des ersten und weiteren Außengewindes aus einem härteren Mate-rial besteht als die Spindelmutter im Bereich des Innengewindes. Eine Spindel-mutter mit einer inneren Schicht aus einem weicheren Material bzw. eine Gewin-despindel mit einer äußeren Schicht aus einem härteren Material können bei-spielsweise eine innen bzw. außen angeordnete Hülse aus einem entsprechenden Material aufweisen. Gemäß einer weiteren Ausgestaltung besteht die Spindelmut-ter zumindest im Bereich des Innengewindes aus einem Kunststoff und/oder be-steht die Gewindespindel zumindest im Bereich des Außengewindes aus einem Metall. Bevorzugt besteht die Spindelmutter insgesamt aus einem weicheren Ma-terial und die Gewindespindel insgesamt aus einem härteren Material. Falls das Außengewinde mittels der Spindelmutter hergestellt wird, kann analog die Ge-windespindel zumindest im Bereich des Außengewindes aus einem weicheren Material als die Spindelmutter zumindest im Bereich des Innengewindes bestehen, um die Herstellung des Außengewindes zu erleichtern.

Der Kunststoff ist bevorzugt ein zähelastischer, hochtemperaturfester Kunststoff. Zähelastische Kunststoffe weisen einen geringen Abtrag auf, sodass starke Änderungen der Reibung zwischen Spindelmutter und Gewindespindel im Laufe der Zeit vermieden wird. Hochtemperaturfeste Kunststoffe werden ohne Beeinträchti-gung ihrer Materialeigenschaften autoklavierbar. Geeignete Kunststoffe sind PEEK (Polyetheretherketon) oder PEI (Polyetherimid).

Bei der Verwendung von Kunststoffen, besonders den vorgenannten, als einem Material der Reibpartner Spindelmutter-Gewindespindel, tritt der Vorteil der Erfindung besonders gut auf, dass durch das andere Gewindeprofil des weiteren Innen- oder Außengewindes die Reibung zwischen den Reibpartnern reduziert wird.

Als Metall kann beispielsweise Messing oder Edelstahl zum Einsatz kommen.

Gemäß einer Ausgestaltung beträgt das Drehmoment zum Verstellen der Gewindespindel in der Spindelmutter maximal etwa 55 mNm, d. h. 55 x 10-3Nm. Bevorzugt beträgt es maximal etwa 40 mNm. Toleranzbedingte Abweichungen von den genannten Obergrenzen sind möglich.

Die Hubstange kann komplett außerhalb der Gewindespindel angeordnet sein. Bevorzugt wird der Anschlag von einer Stirnseite der Gewindespindel oder der Spindelmutter gebildet. Gemäß einer bevorzugten Ausgestaltung weist die Gewindespindel einen die Hubstange teilweise aufnehmenden Kanal auf. Weiterhin bevorzugt ist der Kanal durch die gesamte Gewindespindel hindurch erstreckt und sind der Gegenanschlag und das Antriebsmittel auf verschiedenen Seiten der Gewindespindel angeordnet.

Das Antriebsmittel der Hubstange ist beispielsweise ein Antriebsmotor. Gemäß einer bevorzugten Ausgestaltung ist das Antriebsmittel der Hubstange ein Betätigungsknopf. Der Betätigungsknopf ist bevorzugt entgegen der Wirkung einer Federeinrichtung betätigbar, die die Hubstange bei Entlastung in eine Ausgangsposition verlagert, in der die Hubstange am weitesten von der Verdrängungskammer entfernt ist.

Gemäß einer weiteren Ausgestaltung steht die Spindelmutter bezüglich der Verdrängungskammer fest und ist die Gewindespindel hinsichtlich der Spindelmutter schraubbar.

Die Erfindung wird nachfolgend anhand der anliegenden Zeichnungen von Ausführungsbeispielen näher erläutert. In den Zeichnungen zeigen:
- Fig. 1: Eine Pipettiervorrichtung in Seitenansicht;
- Fig. 2: das Gehäuseoberteil derselben Pipettiervorrichtung im Längsschnitt;
- Fig. 2.1: dasselbe Gehäuseoberteil im Längsschnitt mit eingekreisten Einzel-heiten;
- Fig. 2.2: Einzelheit 2.2 von Fig. 2.1;
- Fig. 2.3: Einzelheit 2.3 von Fig. 2.1;
- Fig. 2.4: Einzelheit 2.4 von Fig. 2.1;
- Fig. 3: Gewindespindel und Spindelmutter einer herkömmlichen Pipettier- vorrichtung in einem vergrößerten Längsschnitt;
- Fig. 4: Gewindespindel und Spindelmutter der erfindungsgemäßen Pipet- tiervorrichtung in einem vergrößerten Längsschnitt;
- Fig. 5: alternative Gewindespindel und Spindelmutter für die Pipettier-vorrichtung in einem vergrößerten Längsschnitt;
- Fig. 6: alternative Gewindespindel und Spindelmutter für die Pipettier-vorrichtung in einem vergrößerten Längsschnitt;
- Fig. 7: alternative Gewindespindel und Spindelmutter für die Pipettier-vorrichtung in einem vergrößerten Längsschnitt;
- Fig. 8: Einkanal-Gehäuseunterteil derselben Pipettiervorrichtung in einem Längsschnitt.

Die Angaben "oben", "unten", "horizontal", "vertikal" und "vorn", "hinten" beziehen sich auf die Ausrichtung der Pipettiervorrichtung in den Zeichnungen. Hierbei handelt es sich um die Ausrichtung der Pipettiervorrichtung, bei der eine damit verbundene Pipettenspitze mit ihrer Spitzenöffnung unten angeordnet ist, um Flüssigkeit aus einem unterhalb der Pipettiervorrichtung befindlichen Gefäß aufzunehmen bzw. in ein solches Gefäß abzugeben.

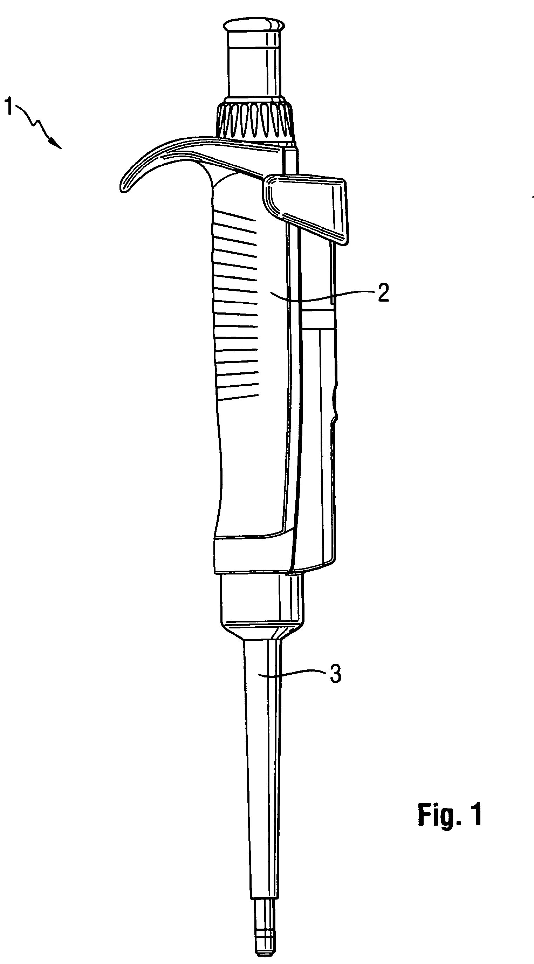

Die Pipettiervorrichtung gemäß Fig. 1,2 und 8 hat ein lang gestrecktes, als Griff ausgeformtes Gehäuse 1 mit einem Gehäuseoberteil 2 und einem Gehäuseunter-teil 3.

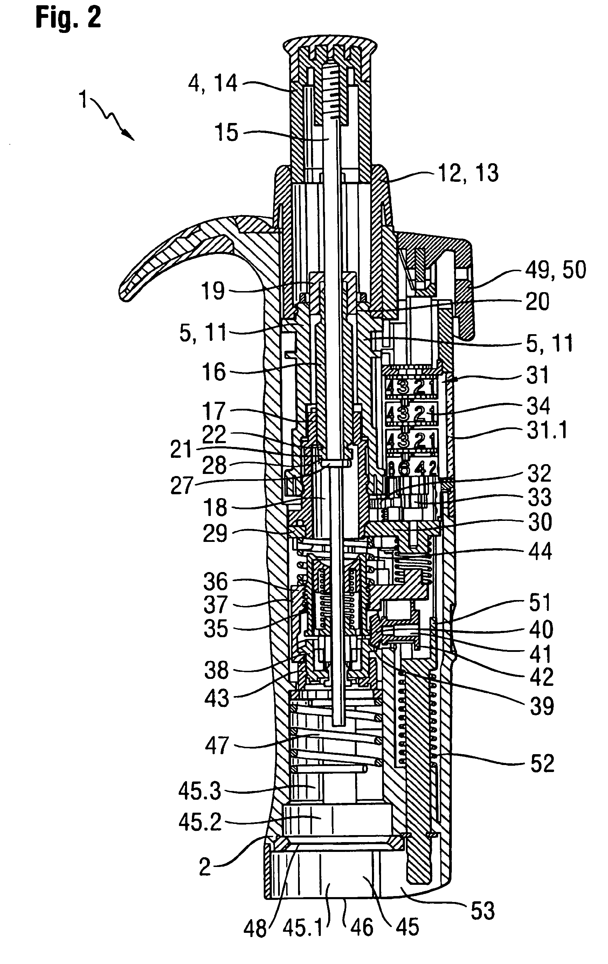

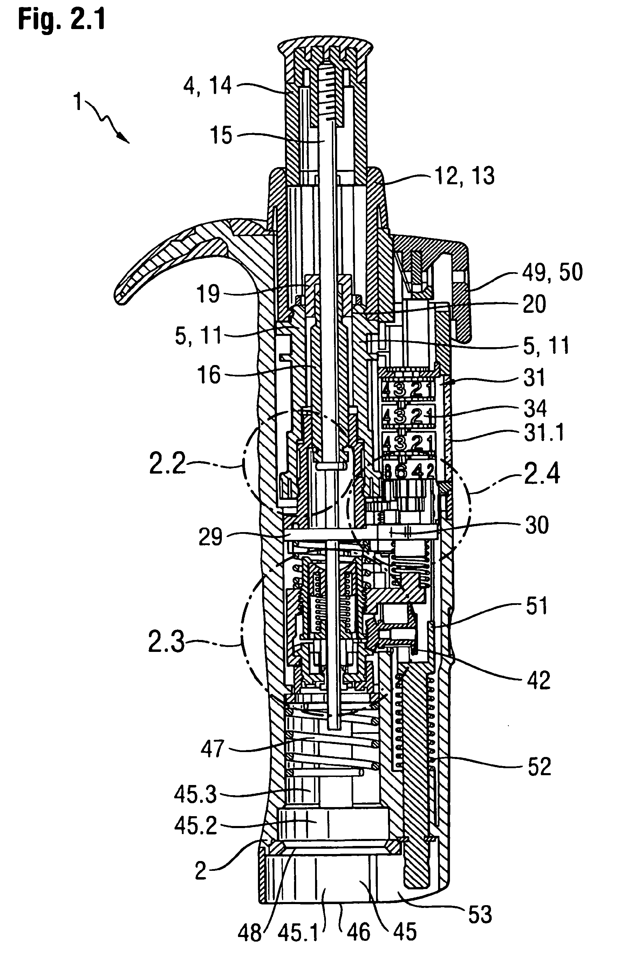

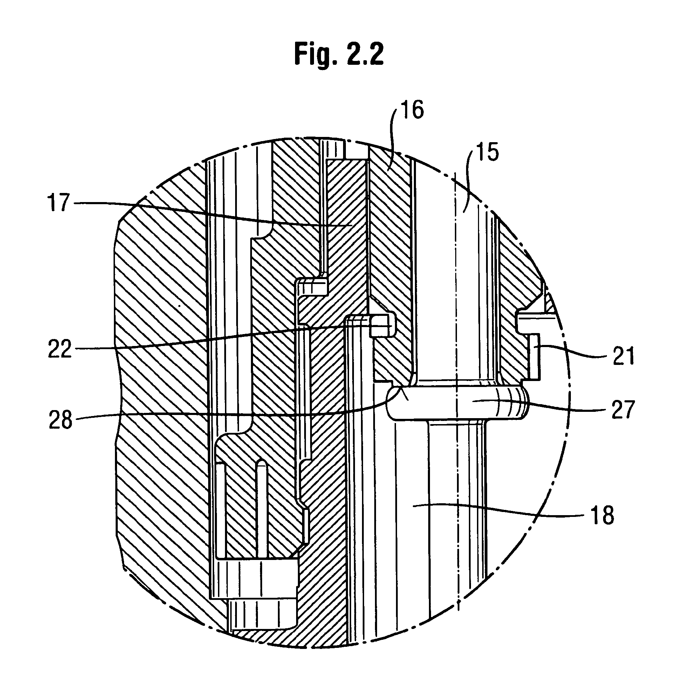

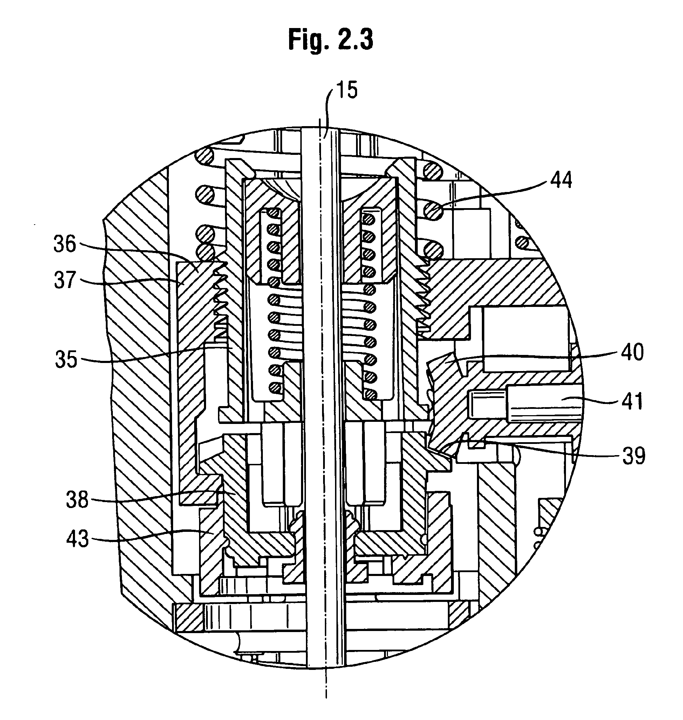

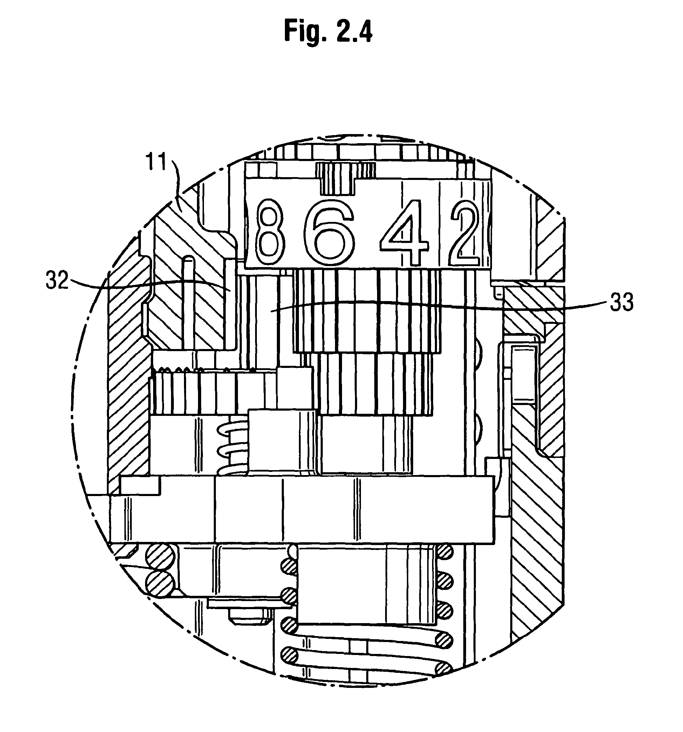

Gemäß Fig. 2 weist das Gehäuseoberteil 2 Antriebsmittel 4 und Einstelleinrichtungen 5 zum Einstellen des Dosiervolumens auf.

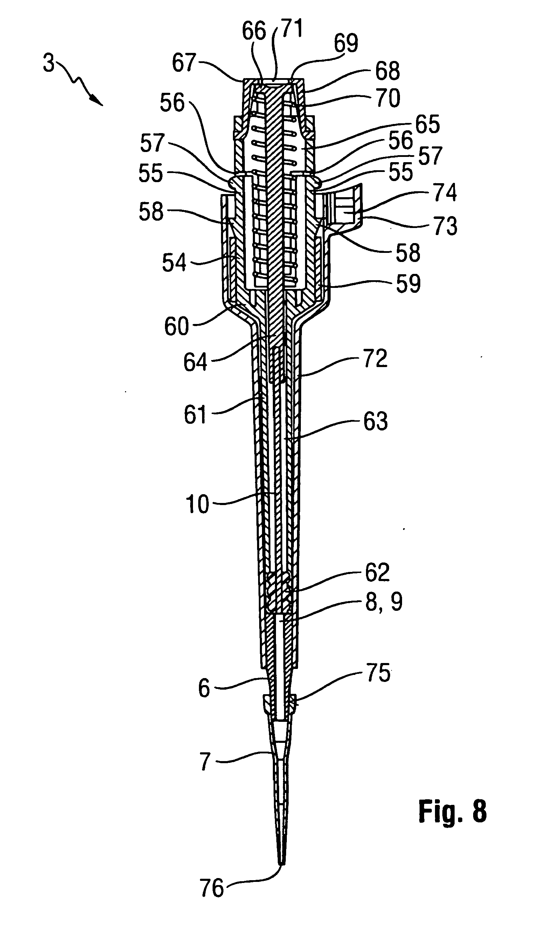

Gemäß Fig. 8 umfasst das Gehäuseunterteil 3 am unteren Ende einen Konus 6 zum Aufstecken einer Pipettenspitze 7 und eine Verdrängungseinrichtung 8 mit einer Verdrängungskammer in Form eines Zylinders 9 und einem Verdrängungs-organ in Form eines Kolbens 10. Die Bewegung des Kolbens 10 ist mittels der Antriebsmittel 4 antreibbar.

Gemäß Fig. 2 ist im Oberbereich des Gehäuseoberteils 2 ist eine Einstellhülse 11 axial unverschieblich und drehbar gelagert. Die Einstellhülse 11 ist oben drehfest mit einem Einstellring 12 verbunden, der einen oben aus dem Gehäuseoberteil 2 hervorstehenden axial geriffelten Bedienabschnitt 13 aufweist. Im Einstellring 12 ist ein Bedienknopf 14 angeordnet, der noch weiter als der Bedienabschnitt 13 nach oben aus dem Gehäuseoberteil 2 hervorsteht.

Der Bedienknopf 14 ist mit einer Hubstange 15 verbunden, die im Gehäuseober-teil 2 durch eine Gewindespindel 16 hindurchgeführt ist. Die Gewindespindel 16 ist in eine Spindelmutter 17 eingeschraubt, die einteilig mit einem im Gehäuse-oberteil fixierten Hubkörper 18 ausgebildet ist.

Die Gewindespindel 16 weist oben einen drehfest mit ihr verbundenen Mitnehmer 19 auf. Der Mitnehmer 19 hat am Umfang zwei diametral einander gegenüberliegende, nach außen vorstehende - nicht geneigte - Radialvorsprünge, die in axial verlaufende Nuten 20 am Innenumfang der Einstellhülse 11 eingreifen.

Die Gewindespindel 16 hat unten einen Endanschlag in Form radial nach außen vorstehender Rippen 21, die in der gezeigten obersten Stellung an einem inneren Absatz 22 des Hubkörpers 18 anliegen, mit dem sie zusammen wirken.

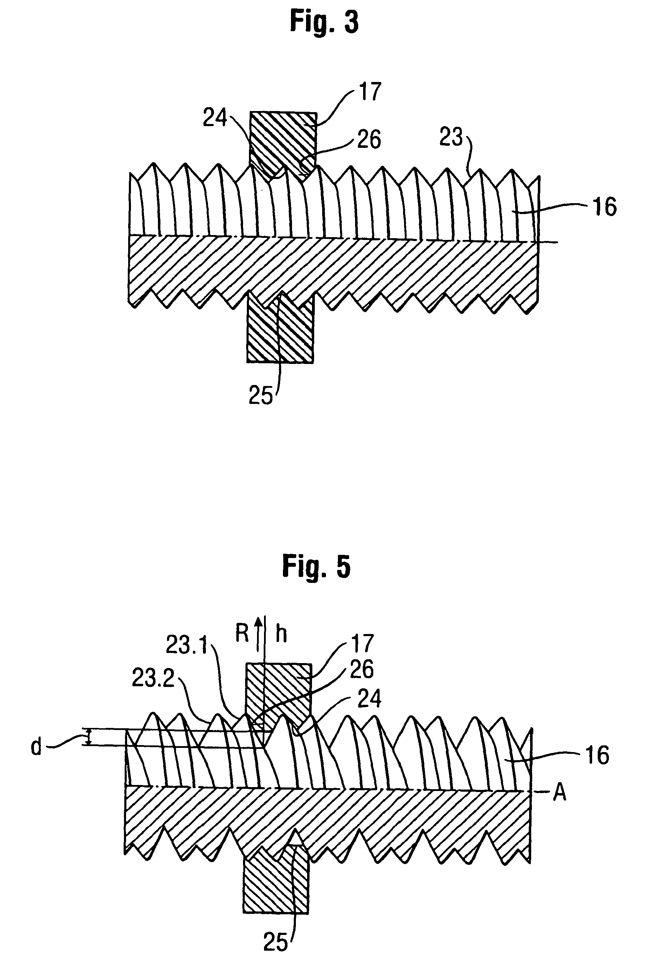

Gemäß Fig. 3 ist bei herkömmlichen Pipettiervorrichtungen eine Gewindespindel 16 aus Metall mit einem als Spitzgewinde ausgeführten Außengewinde 23 in eine Spindelmutter 17 aus Kunststoff eingedreht. Hierdurch ist ein Innengewinde 24 in die Bohrung 25 der Spindelmutter 17 eingeformt. Die Gewindespindel 16 ist spielfrei in der Spindelmutter 17 gehalten. Bei dieser Anordnung ist die Reibflä-che 26 zwischen Gewindespindel 16 und Spindelmutter 17 verhältnismäßig groß und dementsprechend ist ein hohes Drehmoment zum Verdrehen der Gewinde-spindel 16 aufzuwenden. Bei Pipettiervorrichtungen unterschiedlicher Größe, die verschiedene Einstellbereiche der Dosiervolumina aufweisen, ist die Steigung des Außengewindes 24 verschieden. Demzufolge sind die Reibflächen und die beim Einstellen aufzuwendenden Drehmomente unterschiedlich.

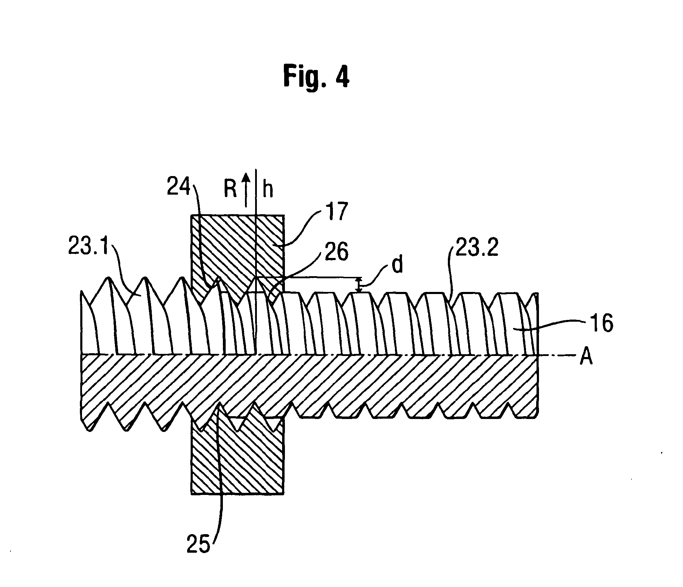

Anhand der Fig. 4 und 5 wird der Gewindeeingriff einer mindestens ein Innengewinde 24 erzeugenden Gewindespindel 16 in die Spindelmutter 17 beispielhaft erläutert.

Gemäß Fig. 4 weist die eingängige Gewindespindel 16 in einem ersten Abschnitt ein erstes Außengewinde 23.1 und in einem zweiten, benachbarten Abschnitt ein zweites Außengewinde 23.2 auf. Das erste Außengewinde 23.1 hat einen größeren Außendurchmesser als das zweite Außengewinde 23.2. Kerndurchmesser, Flankenwinkel und Steigung des ersten Außengewindes 23.1 und des zweiten Außengewindes 23.2 stimmen überein. Das erste Außengewinde 23.1 ist als Spitzgewin-de und das zweite Außengewinde (23.2) als Trapezgewinde ausgebildet. Die Gewindespindel 16 ist im Einstellbereich der Dosiervolumina nur mit dem zweiten Außengewinde 23.2 in die Spindelmutter 17 eingeschraubt. Die Reibfläche 26 und dementsprechend das aufzubringende ist Drehmoment reduziert. Insbesondere der reibungsintensive Eingriff der Spitzen des Außengewindes 23.1 in das Innengewinde 24 wird so vermieden.

Gemäß Fig. 5 ist bei einer Erfindungsvariante die Gewindespindel 16 mit einem zweigängigen Außengewinde 23 versehen. Dabei ist das zweite Außengewinde 23.2 tiefer geschnitten als das erste Außengewinde 23.1.

Beim Einschrauben der Gewindespindel 16 in eine Spindelmutter 17, die lediglich mit einer Bohrung 25 ohne Gewinde versehen ist, wird ein zweigängiges Innengewinde 24 eingeformt. Da das zweite Außengewinde 23.2 der Gewindespindel 16 tiefer geschnitten ist als das erste Außengewinde 23.1, reduziert sich die Reib-fläche 26 und somit auch die Drehkraft. Insbesondere der reibungsintensive Ein-griff der Spitzen des Innengewindes 24 in das zweite Außengewinde 23.2 wird vermieden. Die Tiefe des zweiten Außengewindes 23.2 kann variabel eingestellt werden und somit jede gewünschte Verstellkraft realisiert werden. Die Führung und die Tragkraft der Gewindespindel 16 in der Spindelmutter 17 werden hier da-durch nicht wesentlich beeinträchtigt.

Durch Veränderung von Gewindegrößen (z.B. der Außendurchmesser von erstem oder zweitem Außengewinde 23.1, 23.2 von Fig. 4 oder der Innendurchmesser der Außengewinde 23.1, 23.2 von Fig. 5) kann jede gewünschte Verstellkraft realisiert werden. Hierdurch ist es möglich, Pipettiervorrichtungen für verschiedene Dosierbereiche zur Verfügung zu stellen, bei denen das für das Einstellen aufzubringen-de Drehmoment übereinstimmt.

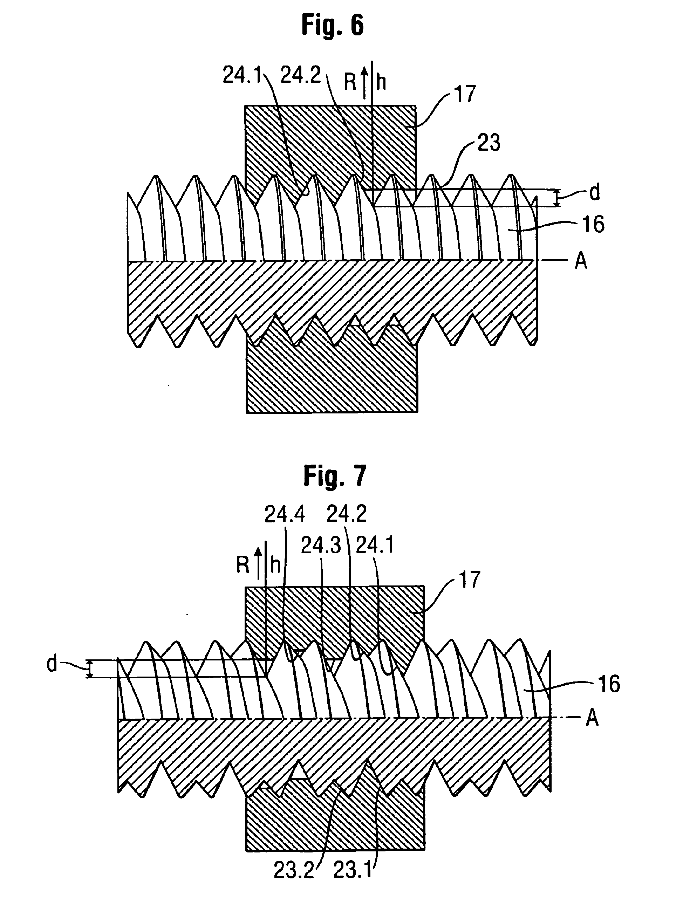

Anhand der Fig. 6 und 7 wird der Gewindeeingriff einer Gewindespindel 16 in ei-ne mindestens ein Außengewinde erzeugenden Spindelmutter 17 beispielhaft er-läutert.

Gemäß Fig. 6 weist eine eingängige Spindelmutter 17 in einem ersten Abschnitt ein erstes Innengewinde 24.1 und in einem benachbarten Abschnitt ein weiteres bzw. zweites Innengewinde 24.2 auf. Das erste Innengewinde 24.1 und das zweite Innengewinde 24.2 haben dieselben Außendurchmesser und dieselben Flankenwinkel. Der Innendurchmesser des ersten Innengewindes 24.1 ist kleiner als der Innendurchmesser des zweiten Innengewindes 24.2.

Durch Eindrehen eines glattzylindrischen Rohlings einer Gewindespindel 16 in das erste Innengewinde 24.1 wird in der Gewindespindel 16 ein tief eingeschnitte-nes eingängiges Außengewinde 23 erzeugt. Das Außengewinde 23 hat im Bereich des zweiten Innengewindes 24.2 eine verminderte Reibkraft, weil es nicht mit Spitzen in das Außengewinde 23 eingreift.

Gemäß Fig. 7 hat eine zweigängige Spindelmutter 17 ein erstes Innengewinde 24.1 mit einem kleineren Innendurchmesser und ein weiteres bzw. zweites Innengewinde 24.2 mit einem größeren Innendurchmesser. Die Außendurchmesser der Innengewinde 24.1 und 24.2 stimmen überein.

Durch Eindrehen eines glattzylindrischen Rohlings einer Gewindespindel 16 wird auf der Gewindespindel 16 ein zweigängiges Außengewinde mit einem ersten Außengewinde 23.1 mit einem weiteren bzw. zweiten Außengewinde 23.2 er-zeugt. Im Bereich des Eingriffes des ersten Außengewindes 23.1 in das erste Innengewinde 24.1 sind die Reibflächen größer als im Bereich des Eingriffes des zweiten Außengewindes 23.2 in das zweite Innengewinde 24.2. Hierdurch lassen sich bereits die Reibkräfte steuern. Zusätzlich sind in einen Teil der Spindelmutter (in Fig. 7 im linken Teil) die Spitzen des erste Innengewindes 24.1 bei 24.3 und die Spitzen des zweiten Innengewindes 24.2 bei 24.4 entfernt, sodass der Eingriff der Spitzen in die Außengewinde 23.1, 23.2 entfällt und die Reibkraft weiter deut-lich reduziert wird.

In allen Erfindungsvarianten der Figuren 4 bis 7 wiest bei dem zweiten Außengewinde (23.2) der Gewindespindel (16) oder dem zweiten Innengewinde (24.2) der Spindelmut-ter (17) die Spindelmutter (17) mindestens teilweise in der Höhe h des Außendurchmes-sers und/oder Innendurchmessers des Außengewindes (23.2, 23) der Gewindespindel (16) in radialer Richtung R zur Achse A der Gewindespindel (16) einen Abstand d zur Gewindelspindel (16) auf. Dabei handelt es sich bei der Achse A um die Symmetrieachse und falls die Spindel drehbar ist, auch die Drehachse der Spindel. Die radiale Richtung R zur Drehachse A steht bekanntermaßen senkrecht auf der Achse A und weist von der Achse weg. Mit der Höhe h ist eine Ebene senkrecht zur Drehachse bezeichnet, wobei der Außen- bzw. Innendurchmesser des Außengewindes (23.2, 23) in der radialen Rich-tung R in der Ebene der Höhe h liegt. Der so definierte Abstand d ist bevorzugt größer als 0,015 mm und wird besonders bevorzugt im Bereich von 0,020 mm bis 0,060 mm gewählt, wie zum Beispiel d- 0,025 mm und d = 0,050 mm.

Gemäß Fig. 2 hat die Hubstange 15 einen oberen Anschlag in Form einer nach auβen vorstehenden Ringscheibe 27, die in der gezeigten Stellung an der unteren Stirnseite 28 der Gewindespindel 16 anliegt, die einen Gegenanschlag bildet. Der obere Anschlag 27 begrenzt den Hub der Hubstange 15 nach oben.

Am unteren Ende des Hubkörpers 18 ist ein kreisringscheibenförmiger Träger 29 fixiert, der am Umfang einen seitlich vorstehenden, konsolenartigen Abschnitt 30 hat, auf den ein Zählwerk 31 gelagert ist. Die Hubstange 15 durch den kreisringscheibenförmigen Träger 29 hindurchgeführt.

Die Einstellhülse 11 hat unten am Umfang ein Zahnrad 32 und das Zählwerk 31 weist ein weiteres Zahnrad 33 an einer Anfangsrolle auf. Die Zahlenrädchen 34 des Zählwerks 31 sind von außerhalb des Gehäuseoberteiles 2 durch ein Fenster 31.1 sichtbar, das eine transparente Abdeckung aufweist.

Zur Kopplung von Einstellhülse 11 und Zählwerk 31 ist auf einer Achse verschieblich ein Zahnradsatz gelagert. Der Zahnradsatz wird von einer Schraubenfeder in eine Position gegen einen axialen Anschlag gedrückt, in der ein erstes Zahnrad des Zahnradsatzes mit dem Zahnrad 32 der Einstellhülse 11 kämmt und ein zweites, drehfest mit dem ersten verbundenes Zahnrad des Zahnradsatzes mit dem weiteren Zahnrad 33 an der Anfangsrolle kämmt. Entgegen der Federwirkung ist der Zahnradsatz axial verlagerbar, so dass das erste und das zweite Zahnrad außer Eingriff kommen.

Die vorbeschriebene Anordnung aus Zahnradsatz, Achse und Schraubenfeder ist in Fig. 1 verdeckt. Im Einzelnen ist diese Anordnung in der DE 10 2005 033 378 A1 bzw. US 2007 014 696 A1 anhand der Fig. 4 und 5 beschrieben, insbesondere in den Abschnitten [0048] bis [0050]. Die diesbezüglichen Ausführungen sind durch Bezugnahme in die vorliegende Anmeldung einbezogen.

Im Gehäuseoberteil 2 ist unterhalb des Hubkörpers 18 ein topfförmiger Halter 35 eines Überhubsystems 36 angeordnet. Der Halter 35 hat ein Außengewinde, das schraubbar in einem Innengewinde eines im Gehäuseoberteil fixierten Trägers 37 des Überhubsystems 36 angeordnet ist.

Der Halter 35 enthält einen tellerförmigen unteren Anschlag für die Ringscheibe 27 an der Hubstange 15. Der untere Anschlag ist unter einem nach innen geboge-nen, oberen Rand des Halters 35 angeordnet. Eine Überhubfeder, die sich am Bo-den des Halters 35 abstützt, drückt den unteren Anschlag gegen den oberen Rand des Halters 35.

Die Hubstange 15 ist durch zentrale Durchgänge des unteren Anschlages, durch die als Schraubenfeder ausgeführte Überhubfeder und durch einen zentralen Durchgang im Boden des Halters 35 hindurchgeführt.

Der tellerförmige Anschlag, der nach innen gebogene, obere Rand des Halters und die Überhubfeder sind in Fig. 1 verdeckt. Die Anordnung ist grundsätzlich in der DE 10 2005 033 378 A1 bzw. US 2007 014 696 A1 anhand der Fig. 2 und 3 sowie in den Abschnitten [0053] bis [0055] im Einzelnen beschrieben. Die diesbezügli-chen Ausführungen werden durch Bezugnahme in die vorliegende Anmeldung einbezogen.

Unterhalb des Halters 35 ist im gehäusefesten Träger 37 des Überhubsystems 36 konzentrisch zur Hubstange 15 ein angetriebenes Zahnrad 38 eines Kegelradgetriebes 39 drehbar gelagert. Das angetriebene Zahnrad 38 hat am Innenumfang vorstehende Rippen, die in axial erstreckten Nuten am Außenumfang des Halters 35 eingreifen, so dass das angetriebene Zahnrad drehfest mit dem Halter 35 ver-bunden ist, der Halter 35 jedoch axial bezüglich des angetriebenen Zahnrades 38 verlagerbar ist.

Ein antreibendes Zahnrad 40 des Kegelradgetriebes 39 ist über eine im Träger 37 drehbar gelagerte Welle 41 mit eine von außen zugänglichen Werkzeugangriff 42 verbunden.

Durch Ansetzen eines Werkzeuges an den Werkzeugangriff 42 und Drehen des Werkzeuges ist es möglich, den Halter 35 im gehäusefesten Träger 37 in eine andere Position zu schrauben. Infolgedessen wird der untere Anschlag verstellt, der den Hub der Hubstange 15 nach unten begrenzt, wobei jedoch unter Verformung der Überhubfeder ein Überhub möglich ist.

Am Umfang des Halters 35 ist eine Skala 43 vorhanden, die durch ein mit einer Markierung versehenes Gehäusefenster von außen ablesbar ist. Eine ähnliche Konstruktion ist in der DE 10 2005 033 378 A1 bzw. US 2007 014 696 A1 anhand von Fig. 7 und im Abschnitt [0061] beschrieben. Die diesbezüglichen Ausführungen sind durch Bezugnahme in die vorliegende Anmeldung einbezogen.

Zwischen kreisringscheibenförmigem Träger 29 und gehäusefestem Träger 37 ist eine weitere Schraubenfeder 44 vorhanden, die den Hubkörper 18 von unten im Gehäuseoberteil 2 abstützt.

Unterhalb des Überhubsystems 36 ist im Gehäuseoberteil 2 eine Aufnahme 45 vorhanden, die mehrere, im Wesentlichen zylindrische Abschnitte 45.1, 45.2, 45.3 aufweist. Die Aufnahme 45 erweitert sich stufenweise zu einer axialen Öffnung 46 am unteren Ende des Gehäuseoberteils 2 hin.

Die Hubstange 15 ragt am unteren Ende in den oberen Abschnitt 45.3 der Aufnahme 45 hinein. Ferner ist im oberen Abschnitt 45.3 der Aufnahme 45 eine weitere Schraubenfeder 47 im Gehäuseoberteil 2 angeordnet. Die weitere Schraubenfeder 47 ist am oberen Rand im Gehäuseoberteil 2 fixiert. Die Aufnahme 45 hat am unteren Rand des mittleren Abschnittes 45.2 einen kreisringförmigen, nach in-nen vorstehenden Vorsprung 48, der der Befestigung eines Gehäuseunterteils 3 dient.

Ferner hat die Pipettiervorrichtung 1 eine Abwurfeinrichtung 49. Diese hat im Gehäuseoberteil 2 neben dem Einstellring 13 einen Abwurfknopf 50. Der Abwurfknopf 50 ist mit einer Abwurfstange 51 verbunden, die parallel zur Hubstan-ge 15 durch das Gehäuseoberteil 2 hindurch verläuft.

Die Abwurfstange 51 ist über eine weitere Schraubenfeder 52 im Gehäuseoberteil 2 abgestützt, so dass der Abwurfknopf 50 in die dargestellte Ausgangslage ge-drückt wird, aus der er entgegen der Wirkung der weiteren Schraubenfeder 52 eindrückbar ist.

Das untere Ende der Abwurfstange ragt in eine seitliche Erweiterung 53 des unte-ren Abschnittes 45.1 der Aufnahme 45 hinein.

Gemäß Fig. 5 weist das Gehäuseunterteil 3 der Pipettiervorrichtung 1 an einem oberen, zylindrischen Abschnitt 54 zwei Federzungen 55 auf, die durch seitliche Schlitze von dem Rest des zylindrischen Abschnittes 54 getrennt sind. Außerdem ist das obere Ende der Federzungen 55 gegenüber dem Oberteil des zylindrischen Abschnittes 54 durch einen Schlitz 56 getrennt. Unten sind die Federzungen 55 einteilig mit dem Rest des zylindrischen Abschnittes 54 verbunden. Die Federzungen 55 haben am oberen Ende jeweils einen nach außen vorstehenden Haken 57und in einem Abstand davon jeweils einen rampenartigen Vorsprung 58, der nach unten angeschrägt ist.

Außen ist auf dem zylindrischen Abschnitt 54 ein Entriegelungsring 59 angeord-net. Der Entriegelungsring 59 drückt beim Verschieben nach oben gegen die rampenartigen Vorsprünge 58, so dass die Federzungen 55 etwas einfedern.

Das Gehäuseunterteil 3 hat unterhalb des zylindrischen Abschnittes 54 einen kur-zen konischen Übergangsabschnitt 60 und darunter einen langgestreckten, sich nach unten leicht konisch verjüngenden Mittelabschnitt 61. Am unteren Ende des Mittelabschnittes 61 ist der Konus 6 angeordnet.

Das Gehäuseunterteil 3 beherbergt die Verdrängungseinrichtung 8. Diese hat im Konus 6 den Zylinder 9, dem der Kolben 10 zugeordnet ist. Der Kolben 10 ist in der gezeigten Ausgangslage mit seinem unteren Ende in einer Dichtung 62 am o-beren Ende des Konus 6 angeordnet.

Der Kolben 10 ist durch einen axialen Durchgangskanal 63 des Mittelabschnittes 61 hindurchgeführt und oben in einem ebenfalls zylindrischen Kolbenhalter 64 größeren Durchmessers gehalten. Der Kolbenhalter 64 ist am Umfang in dem zylindrischen Durchgangskanal 63 geführt.

Der Kolbenhalter 64 erstreckt sich nach oben durch einen zylindrischen Hohlraum 65 des zylindrischen Abschnittes 54 hindurch und hat oben eine tellerförmige Druckplatte 66, die in der gezeigten Lage aus dem zylindrischen Abschnitt 54 heraussteht.

Der zylindrische Abschnitt 54 trägt oben einen Kolbenhalter 67, der mehrere Ar-me 68 umfasst, die jeweils am oberen Ende des zylindrischen Abschnittes 54 be-festigt sind und am anderen Ende eine Kreisscheibe 69 tragen, an deren Unterseite die Druckplatte 66 anliegt. In dieser Position ist der Kolbenhalter 67 durch eine als Schraubenfeder ausgeführte Kolbenrückstellfeder 70 gehalten, die einenends am Boden des zylindrischen Abschnittes 54 und anderenends an der Druckplatte 66 abgestützt ist. Der Kolbenhalter 67 hat in der Kreisscheibe 69 einen zentralen Durchgang 71, durch den ein unterer Abschnitt der Hubstange 15 bis zur Anlage an der Druckplatte 66 einführbar ist.

Die Abwurfeinrichtung 49 hat am Gehäuseunterteil eine Abwurfhülse 72. Diese ist außen auf dem zylindrischen Abschnitt 54 und dem Konus 6 geführt. Dementsprechend ist die innere Kontur der Abwurfhülse 72 den äußeren Konturen der vorerwähnten Abschnitte des Gehäuseunterteils 3 angepasst.

Ferner hat die Abwurfhülse 72 seitlich am oberen Rand einen vorspringenden Ansatz 73, der eine axiale Bohrung 74 zum Einpressen des unteren Endes der Abwurfstange 51 aufweist.

Die Pipettiervorrichtung ist folgendermaßen benutzbar:

Das Gehäuseoberteil 2 und das Gehäuseunterteil 3 sind durch axiales Einstecken des zylindrischen Abschnittes 54 in die Aufnahme, bis die Haken 57 hinter den kreisringförmigen Vorsprung 48 schnappen, und unter Einpressen der Abwurfstange 51 in die Bohrung 73 der Abwurfhülse 71 miteinander verbindbar. Hierbei wird die weitere Schraubenfeder 47 durch den zylindrischen Abschnitt etwas zusammen gedrückt und vorgespannt.

Nach dem Verbinden von Gehäuseoberteil 2 und Gehäuseunterteil 3 greift die Hubstange 15 durch den Durchgang 71 hindurch und liegt mit ihrem unteren Ende an der Druckplatte 66 an.

Zum Einstellen eines zu pipettierenden Volumens wird der Einstellring 13 ge-dreht, bis das Zählwerk 31 das gewünschte Volumen anzeigt. Beim Drehen des Einstellringes 13 wird die Einstellhülse 5 und dadurch der Mitnehmer 19 mitgedreht. Infolgedessen dreht sich die Gewindespindel 16 im Innengewinde 24 und verlagert sich axial im Gehäuseoberteil 2 unter Mitnahme der Ringscheibe 27 und somit der Hubstange 15. Die Radialvorsprünge des Mitnehmers 19 verlagern sich dabei axial entlang der Nuten 20 an der Innenseite der Einstellhülse 11. Hierdurch wird der Hub der Hubstange 15 verändert, der bei Betätigung des Bedienknopfes 14 ausführbar ist. Das Einstellmoment verschiedener Pipettiervorrichtungen mit unterschiedlichem Einstellbereich ist etwa dasselbe.

Ferner wird auf das untere Ende des Konus 6 eine Pipettenspitze 7 mit ihrer obe-ren Spitzenöffnung 75 aufgeklemmt. Die Pipettenspitze 7 hat eine untere Spitzenöffnung 76 zur Aufnahme und Abgabe von Flüssigkeit.

Beim Aufstecken der Pipettenspitze 7 auf den Konus 6 erhöht sich mit zunehmendem Fortschritt des Aufsteckens die Aufsteckkraft. Übersteigt die Aufsteckkraft die Kraft, mit der die weitere Schraubenfeder 47 vorgespannt ist, wird der Konus 6 und damit das gesamte Gehäuseunterteil 2 entgegen der Wirkung der Schrau-benfeder 47 nach oben gedrückt. Wenn der obere Rand der Pipettenspitze 7 gegen den einen Anschlag bildenden unteren Rand der Abwurfhülse 72 drückt, wird ein weiteres Anheben des Gehäuseunterteils 3 verhindert. Die Aufsteckkraft und da-mit die für das Abwerfen erforderliche Abwurfkraft werden somit auf einen be-stimmten Wert begrenzt. Vorstehendes ist im Einzelnen in der EP 1557222 A2 bzw. US 2005 155 439 A1 beschrieben, insbesondere in Abschnitt [0080]. Die betreffenden Ausführungen werden durch Bezugnahme in die vorliegende An-meldung einbezogen.

Zum Pipettieren wird der Bedienknopf 14 nach unten gedrückt, so dass der Kol-ben 10 Luft aus dem Zylinder 9 verdrängt. Dann wird die Pipettenspitze 7 mit ih-rer unteren Spitzenöffnung 76 in die zu pipettierende Flüssigkeit eingetaucht. Da-nach wird der Bedienknopf 14 entlastet. Der Kolben 10 sowie die Hubstange 15 werden von der Kolbenrückstellfeder 70 in ihre Ausgangsstellung zurückgedrückt. Hierbei saugt der Kolben 10 Flüssigkeit durch die untere Spitzenöffnung 76 in die Pipettenspitze 7 ein.

Danach wird die Pipettiervorrichtung 1 mit der daran befestigten Pipettenspitze 7 auf einen Abgabeort ausgerichtet. Die in der Pipettenspitze 7 enthaltene Flüssig-keit wird durch Einrücken des Bedienknopfes 14 und erneutes Eintauchen des Kolbens 10 in den Zylinder 9 und Auspressen von Luft bis zur Anlage der Ring-scheibe 27 am unteren Anschlag abgegeben. Eine Restmenge der Flüssigkeit kann durch einen Überhub ausgeblasen werden. Nach Loslassen des Bedienknopfes 14 fahren Kolben 10 und Hubstange 15 durch Wirkung der Kolbenrückstellfeder 70 in ihre Ausgangslage zurück.

Zum Abgeben der Pipettenspitze wird auf den Abwurfknopf 50 gedrückt. Infolgedessen bewegt sich die Abwurfhülse 72 nach unten und drückt die Pipettenspitze 7 zum Konus 6 ab.

Zum Lösen des Gehäuseunterteils 3 vom Gehäuseoberteil 2 wird zunächst die Abwurfhülse 72 abgenommen und dann der Entriegelungsring 59 ein Stück nach oben geschoben, so dass die Haken 57 nach innen einfedern. Hierdurch kommt das Gehäuseunterteil 2 frei, wobei es von der vorgespannten weiteren Schrauben-feder 47 abgedrückt wird.

Das Gehäuseoberteil 2 ist geeignet statt mit dem oben beschriebenen Einkanal-Gehäuseunterteil 3 mit einem Mehrkanal-Gehäuseunterteil verbunden zu werden. Grundsätzlich kann ein Mehrkanal-Gehäuseunterteil zum Einsatz kommen, wie in Fig. 3 und 4 der EP 1557222 A2 bzw. US 2005 155 439 A1 gezeigt und in den Abschnitten [0083] bis [0095] beschrieben. Die diesbezüglichen Ausführungen in der EP 1557222 A2 bzw. US 2005 155 439 A1 werden durch Bezugnahme in die vorliegende Anmeldung einbezogen. Abweichend von der in der EP 1557222 A2 bzw. US 2005 155 439 A1 beschriebenen Bajonettverbindung zwischen Mehrkanal-Gehäuseunterteil kommt jedoch zur Verbindung mit dem Gehäuseoberteil 2 eine Verbindung mit Federzungen 55 und Entriegelungsring 59 an einem oberen zylindrischen Abschnitt 54 des Mehrkanal-Gehäuseunterteils zur Anwendung, wie in Fig. 5 gezeigt.

Für eine Werkseinstellung wird die Skala 43 am Halter 35 mittels eines an dem Werkzeugansatz 42 angesetzten Werkzeuges auf den Nullpunkt eingestellt. Die Werkskalibrierung wird unter Entkopplung des Zählwerkes 31 von der Einstellhülse 11 vorgenommen. Hierbei wird das Zählwerk 31 verstellt, bis das angezeigte dem gemäß Messung tatsächlich dosierten Dosiervolumen entspricht.

Zur temporären Umkalibrierung der Pipettiervorrichtung 1 auf abweichende Medien und Umgebungsbedingungen wie Dichte, Dampfdruck, Temperatur, etc. wird das Überhubsystem durch Drehen eines an den Werkzeugansatz 42 angesetzten Werkzeuges verstellt. Der Anwender kann zur Werkskalibrierung zurückkehren, indem er die Skala 43 auf den Nullpunkt zurückdreht. Im Einzelnen ist dies in der DE 10 2005 033 378 A1 bzw. US 2007 014 696 A1 insbesondere in den Abschnitten [0058] und [0059] beschrieben, die durch Bezugnahme in die vorliegende Anmeldung einbezogen sind.

## Patentansprüche

1. Pipettiervorrichtung mit
- Mitteln zum lösbaren Verbinden (6) mit mindestens einer Pipettenspitze (7) und mindestens einer Verdrängungseinrichtung (9, 10) mit einer Verdrängungskammer (9) und einem darin beweglich angeordneten Verdrängungsorgan (10) zum Einsaugen und Ausstoßen von Flüssigkeit in und aus der mindestens einen Pipettenspitze (7) oder Mitteln zum lösbaren Verbinden mit mindestens einer Spritze mit einem Zylinder und einem darin verschiebbaren Kolben,
- einer Hubstange (15) zum Antreiben des Verdrängungsorgans (10) oder des Kolbens einer Spritze,
- mit einem Antriebsmittel (14) zum Antreiben der Hubstange (15),
- einer Einstelleinrichtung (5) zum Einstellen des Dosiervolumens mit einer Spindelmutter (17) und einer Gewindespindel (16), wobei eines der Bauteile Spindelmutter (17) und Gewindespindel (16) bezüglich der Verdrängungskammer (9) oder des Zylinders der verbundenen Spritze feststeht und das andere Bauteil bezüg-lich des feststehenden Bauteils schraubbar ist und einen Anschlag (28) aufweist, dem ein Gegenanschlag (27) der Hubstange (15) zugeordnet ist,
- wobei die Gewindespindel (16) ein erstes Außengewinde (23.1) und mindestens ein weiteres Außengewinde (23.2) mit einem anders ausgeprägten Gewindeprofil als das erste Außengewinde (23.1) und die Spindelmutter (17) mindestens ein zugehöriges Innengewinde (24) hat oder die Spindelmutter (17) ein erstes Innengewinde (24.1) und mindestens ein weiteres Innengewinde (24.2) mit einem anders ausgeprägten Gewindeprofil als das erste Innengewinde und die Gewindespindel (16) mindestens ein zugehöriges Außengewinde (23) hat und
- wobei bei dem weiteren Außengewinde (23.2) der Gewindespindel (16) oder dem weiteren Innengewinde (24.2) der Spindelmutter (17) die Spindelmutter (17) mindestens teilweise in der Höhe (h) des Außendurchmessers und/oder Innendurchmessers des Außengewindes (23.2, 23) der Gewindespindel (16) in radialer Richtung (R) zur Achse (A) der Gewindespindel (16) einen Abstand (d) zur Gewindelspindel (16) aufweist.

2. Pipettiervorrichtung nach Anspruch 1, **dadurch gekennzeichnet, dass** das zugehörige Innengewinde (24) der Spindelmutter (17) oder das zugehörige Außengewinde (23) der Gewindespindel (16) mindestens teilweise durch Einschrauben der Gewindespin-del (16) in die Spindelmutter (17) oder Aufschrauben der Spindelmutter (17) auf die Gewindespindel (16) hergestellt wird oder hergestellt worden ist.

3. Pipettiervorrichtung nach Anspruch 1 oder 2, bei der das erste Außengewinde (23.1) oder das erste Innengewinde (24.1) einen anderen Außendurchmesser und/oder einen anderen Innendurchmesser und/oder einen anderen Flankenwinkel und/oder einen anderen Flankendurchmesser und/oder eine andere Form des Gewindeprofils als das weitere Außengewinde (23.2) oder das weitere Innengewinde (24.2) aufweist.

4. Pipettiervorrichtung nach einem der Ansprüche 1 bis 3, bei der im gesamten Einstell-bereich der Einstelleinrichtung (5) das weitere Außengewinde (23.2) in das mittels der Gewindespindel (16) hergestellte Innengewinde (24) oder das mittels der Spin-delmutter (17) hergestellte Außengewinde (23) in das weitere Innengewinde (24.2) eingreift.

5. Pipettiervorrichtung nach einem der Ansprüche 1 bis 4, bei der die Gewindespindel (16) oder die Spindelmutter (17) eingängig ist und sich das weitere Außengewinde (23.2) an das erste Außengewinde (23.1) oder das weitere Innengewinde (24.2) an das erste Innengewinde (24.1) anschließt.

6. Pipettiervorrichtung nach einem der Ansprüche 1 bis 4, bei dem die Gewindespindel (16) oder die Spindelmutter (17) mehrgängig ist und ein erster Gewindegang das erste Außengewinde (23.1) oder das erste Innengewinde (24.1) und ein weiterer Gewinde-gang das weitere Außengewinde (23.2) oder das weitere Innengewinde (24.2) ist.

7. Pipettiervorrichtung nach einem der Ansprüche 1 - 6, bei der das Innengewinde (24) durch Einschrauben der Gewindespindel (16) in eine glattzylindrische Bohrung (25) der Spindelmutter (17) oder das Außengewinde (23) durch Einschrauben einer glatt-zylindrischen Gewindespindel (16) in die Spindelmutter (17) hergestellt ist.

8. Pipettiervorrichtung nach einem der Ansprüche 1 - 7, bei der das Innengewinde (24) durch Einschrauben der Gewindespindel in eine mit nach innen vorstehenden Vor-sprüngen versehene Bohrung (25) der Spindelmutter (17) oder das Außengewinde (23) durch Einschrauben der mit nach außen vorstehenden Vorsprüngen versehenen Gewindespindel (16) in die Spindelmutter (17) hergestellt ist.

9. Pipettiervorrichtung nach einem der Ansprüche 1 - 8, bei der das Innengewinde (24) durch Einschrauben der Gewindespindel (16) in eine mit einem teilweise vorgefertig-ten Innengewinde versehene Spindelmutter (17) oder das Außengewinde (23) durch Einschrauben der mit einem teilweise vorgefertigten Außengewinde versehenen Ge-windespindel (16) hergestellt ist.

10. Pipettiervorrichtung nach einem der Ansprüche 1 - 9, bei der das Innengewinde (24) oder Außengewinde spanend und/oder spanlos hergestellt ist.

11. Pipettiervorrichtung nach einem der Ansprüche 1 - 10, bei der das erste Außengewin-de (23.1) oder das erste Innengewinde (24.1) ein Spitzgewinde und das weitere Au-βengewinde (23.2) oder das weitere Innengewinde (24.2) ein Trapezgewinde ist.

12. Pipettiervorrichtung nach einem der Ansprüche 1 - 11, bei der die Spindelmutter (16) zumindest im Bereich des mittels der Gewindespindel (16) hergestellten Innengewin-des (24) aus weicherem Material als die Gewindespindel (16) zumindest im Bereich der Außengewindes (23) ist oder bei der die Gewindespindel (16) zumindest im Be-reich des mittels der Spindelmutter (17) hergestellten Außengewindes (23) aus wei-cherem Material als die Spindelmutter (17) zumindest im Bereich des Inngewindes (24) ist.

13. Pipettiervorrichtung nach einem der Ansprüche 1 - 12, bei der die Spindelmutter (17) zumindest im Bereich des mittels der Gewindespindel (16) hergestellten Innengewin-des (24) oder die Gewindespindel (16) zumindest im Bereich des mittels der Spin-delmutter (17) hergestellten Außengewindes (23) aus einem Kunststoff hergestellt ist.

14. Pipettiervorrichtung nach einem der Ansprüche 1 - 13, bei der die das Innengewinde (24) herstellende Gewindespindel (16) zumindest im Bereich der Außengewinde (23.1, 23.2) oder die das Außengewinde (23) herstellende Spindelmutter (17) zumin-dest im Bereich der Innengewinde (24) aus einem Metall hergestellt ist.

15. Pipettiervorrichtung nach einem der Ansprüche 1 - 14, bei der das Drehmoment zum Verstellen der Gewindespindel (16) in der Spindelmutter (17) maximal etwa 50 mNm beträgt.

16. Pipettiervorrichtung nach einem der Ansprüche 1 bis 15, **dadurch gekennzeichnet, dass** bei dem weiteren Außengewinde (23.2) der Gewindespindel (16) oder dem wei-teren Innengewinde (24.2) der Spindelmutter (17) die Spindelmutter (17) in der Höhe (h) des Außendurchmessers und/oder Innendurchmessers des Außengewindes (23.2, 23) der Gewindespindel (16) in radialer Richtung (R) zur Achse (A) der Gewinde-spindel (16) einen Abstand (d) zur Gewindelspindel (16) aufweist.

17. Pipettiervorrichtung nach einem der Ansprüche 1 bis 16, **dadurch gekennzeichnet, dass** der Abstand der Spindelmutter (17) zur Gewindespindel (16) bei dem weiteren Außengewinde (23.2) der Gewindespindel (16) oder dem weiteren Innengewinde (24.2) der Spindelmutter (17) in der Höhe (h) des Außendurchmessers und/oder In-nendurchmessers des Außengewindes (23.2, 23) der Gewindespindel (16) in radialer Richtung (R) zur Achse (A) der Gewindespindel (16) größer als 0,015 mm ist.

18. Pipettiervorrichtung nach einem der Ansprüche 1 bis 17, **dadurch gekennzeichnet, dass** der Abstand der Spindelmutter (17) zur Gewindespindel (16) bei dem weiteren Außengewinde (23.2) der Gewindespindel (16) oder dem weiteren Innengewinde (24.2) der Spindelmutter (17) in der Höhe (h) des Außendurchmessers und/oder In-nendurchmessers des Außengewindes (23.2, 23) der Gewindespindel (16) in radialer Richtung (R) zur Achse (A) der Gewindespindel (16) im Bereich von 0,020 mm und 0,060 mm liegt.

## Claims

1. A pipetting device with
• means (6) for detachably connecting with at least one pipette tip (7) and at least one displacement device (9, 10) having a displacement chamber (9) and a displacement member (10) movably arranged therein, for sucking in and ejecting liquid into and out of the at least one pipette tip (7), or means for detachably connecting with at least one syringe with a cylinder and a plunger relocatable therein,
• a lifting rod (15) for driving the displacement member (10) or the plunger of a syringe,
• with a driving means (14) for driving the lifting rod (15),
• an adjustment device (5) for adjusting the metering volume with a lead screw nut (17) and a lead screw (16), wherein one of the components lead screw nut (17) and lead screw (16) is stationary with respect to the displacement chamber (9) or the cylinder of the connected syringe, and the other component is screwable with respect to the stationary component and has a stop (28), to which a counter-stop (27) of the lifting rod (15) is related,
• wherein the lead screw (16) has a first external thread (23.1) and at least one further external thread (23.2) with a thread form shaped different than that of the first external thread (23.1), and the lead screw nut (17) has at least one related internal thread (24) or the lead screw nut (17) has a first internal thread (24.1) and at least one further internal thread (24.2) with a thread form shaped different than that of the first internal thread, and the lead screw (16) has at least one related external thread (23), and
• wherein on the further external thread (23.2) of the lead screw (16) or the further internal thread (24.2) of the lead screw nut (17), the lead screw nut (17) features at least in parts a distance (d) to the lead screw (16) in the radial direction (R) to the axis (A) of the lead screw (16) in the level (h) of the outer diameter and/or inner diameter of the external thread (23.2, 23) of the lead screw (16).

2. A pipetting device according to claim 1, **characterised in that** the related internal thread (24) of the lead screw nut (17) or the related external thread (23) of the lead screw (16) is produced or has been produced at least partly by screwing in the lead screw (16) into the lead screw nut (17) or by screwing on the lead screw nut (17) onto the lead screw (16).

3. A pipetting device according to claim 1 or 2, wherein the first external thread (23.1) or the first internal thread (24.1) has another outer diameter and/or another inner diameter and/or another included thread angle and/or another pitch diameter and/or another shape of the thread form than the further external thread (23.2) or the further internal thread (24.2).

4. A pipetting device according to any one of claims 1 to 3, wherein in the whole adjustment range of the adjustment device (5), the further external thread (23.2) engages into the internal thread (24) produced by means of the lead screw (16), or the external thread (23) produced by means of the lead screw nut (17) engages into the further internal thread (24.2).

5. A pipetting device according to any one of claims 1 to 4, wherein the lead screw (16) or the lead screw nut (17) is single started, and the further external thread (23.2) is added to the first external thread (23.1) or the further internal thread (24.2) is added to the first internal thread (24.1).

6. A pipetting device according to any one of claims 1 to 4, wherein the lead screw (16) or the lead screw nut (17) is multi started, and a first thread path is provided by the first external thread (23.1) or the first internal thread (24.1), and a further thread path is provided by the further external thread (23.1 ) or the further internal thread (24.2).

7. A pipetting device according to any one of claims 1 to 6, wherein the internal thread (24) is produced by screwing in the lead screw (16) into an even cylindrical bore (25) of the lead screw nut (17), or the external thread (23) is produced by screwing in an even cylindrical lead screw (16) into the lead screw nut (17).

8. A pipetting device according to any one of claims 1 to 7, wherein the internal thread (24) is produced by screwing in the lead screw (16) into a bore (25) of the lead screw nut (17), the bore (25) being provided with inwardly projecting noses, or the external thread (23) is produced by screwing in the lead screw (16), provided with outwardly projecting noses, into the lead screw nut (17).

9. A pipetting device according to any one of claims I to 8, wherein the internal thread (24) is produced by screwing in the lead screw (16) into a lead screw nut (17) provided with a partly prefabricated internal thread, or the external thread (23) is produced by screwing in the lead screw (16) which is provided with a partly prefabricated external thread.

10. A pipetting device according to any one of claims 1 to 9, wherein the external thread (24) or the internal thread is produced by machining and/or in a non-machining manner.

11. A pipetting device according to any one of claims I to 10, wherein the first external thread (23.1) or the first internal thread (24.1) is a thread with a triangular shape, and the further external thread (23.2) or the further internal thread (24.2) is a thread with a trapezoidal shape.

12. A pipetting device according to any one of claims 1 to 11, wherein the lead screw nut (17) is made at least in the region in which the internal thread (24) is produced by means of the lead screw (16) of a softer material than the lead screw (16) at least in the region of the external thread (23), or wherein the lead screw (16) is made at least in the region in which the external thread (23) is produced by means of the lead screw nut (17) of a softer material than the lead screw nut (17) at least in the region of the internal thread (24).

13. A pipetting device according to any one of claims 1 to 12, wherein the lead screw nut (17) is made of a plastic at least in the region in which the internal thread (24) is produced by means of the lead screw (16), or the lead screw (16) is made of a plastic at least in the region in which the external thread (23) is produced by means of the lead screw nut (17).

14. A pipetting device according to any one of claims 1 to 13, wherein the lead screw (16) producing the internal thread (24) is made of a metal at least in the region of the external threads (23.1, 23.2), or the lead screw nut (17) producing the external thread (23) is made of a metal at least in the region of the internal threads (24).

15. A pipetting device according to any one of claims 1 to 14, wherein the torque for moving the lead screw (16) in the lead screw nut (17) is about 50 mNm at maximum.

16. A pipetting device according to any one of claims 1 to 15, **characterised in that** on the further external thread (23.2) of the lead screw (16) or on the further internal thread (24.2) of the lead screw nut (17), the lead screw nut (17) features a distance (d) to the lead screw (16) in the radial direction (R) to the axis (A) of the lead screw (16) in the level (h) of the outer diameter and/or inner diameter of the external thread (23.2, 23) of the lead screw (16).

17. A pipetting device according to any one of claims 1 to 16, **characterised in that** the distance of the lead screw nut (17) to the lead screw (16) on the further external thread (23.2) of the lead screw (16) or the further internal thread (24.2) of the lead screw nut (17) in the radial direction (R) to the axis (A) of the lead screw (16) in the level (h) of the outer diameter and/or inner diameter of the external thread (23.2, 23) of the lead screw (16) is greater than 0,015 mm.

18. A pipetting device according to any one of claims 1 to 17, **characterised in that** the distance of the lead screw nut (17) to the lead screw (16) on the further external thread (23.2) of the lead screw (16) or the further internal thread (24.2) of the lead screw nut (17) in the radial direction (R) to the axis (A) of the lead screw (16) in the level (h) of the outer diameter and/or inner diameter of the external thread (23.2, 23) of the lead screw (16) is in the range from 0,020 mm to 0,060 mm.

## Revendications

1. Dispositif de pipetage comprenant
des moyens de liaison amovible (6) comprenant au moins une pointe de pipette (7) et au moins un dispositif de compression (9, 10) doté d'une chambre de compression (9) et d'un organe de compression (10) agencé mobile dans celle-ci pour aspirer et expulser le liquide dans et hors de ladite au moins une pointe de pipette (7) ou des moyens de liaison amovible comprenant au moins une seringue dotée d'un cylindre et d'un piston coulissant dans celui-ci,
une tige de piston (15) pour commander l'organe de compression (10) ou le piston d'une seringue,
avec un moyen de commande (14) pour commander la tige de piston (15),
un dispositif d'ajustage (5) pour ajuster le volume de dosage avec un écrou de broche (17) et une vis filetée (16), une des pièces, l'écrou de broche (17) ou la vis filetée (16), est fixe par rapport la chambre de compression (9) ou au cylindre de la seringue reliée et l'autre pièce peut être vissée par rapport à la pièce fixe et présente une butée (28) à laquelle est associée une contre-butée (27) de la tige de piston (15),
la vis filetée (16) ayant un premier filet externe (23.1) et au moins un autre filet externe (23.2) présentant un profil de filetage caractéristique différent de celui du premier filet externe (23.1) et l'écrou de broche (17) ayant au moins un filet interne correspondant (24) ou l'écrou de broche (17) ayant un premier filet interne (24.1) et au moins un autre filet interne (24.2) présentant un profil de filetage caractéristique différent de celui du premier filet interne et la vis filetée (16) ayant au moins un filet externe correspondant (23) et
dans le cas de l'autre filet externe (23.2) de la vis filetée (16) ou de l'autre filet interne (24.2) de l'écrou de broche (17), l'écrou de broche (17) présente au moins partiellement dans la hauteur (h) du diamètre externe et/ou du diamètre interne du filet externe (23.2, 23) de la vis filetée (16) dans la direction radiale (R) par rapport à l'axe (A) de la vis filetée (16) une distance (d) par rapport à la vis filetée (16).

2. Dispositif de pipetage selon la revendication 1, **caractérisé en ce que** le filet interne correspondant (24) de l'écrou de broche (17) ou le filet externe correspondant (23) de la vis filetée (16) sont fabriqués ou ont été fabriqués au moins partiellement par serrage de la vis filetée (16) dans l'écrou de broche (17) ou par vissage de l'écrou de broche (17) sur la vis filetée (16).

3. Dispositif de pipetage selon les revendications 1 ou 2, dans lequel le premier filet externe (23.1) ou le premier filet interne (24.1) présentent un autre diamètre externe et/ou un autre diamètre interne et/ou un autre angle de filet et/ou un autre diamètre sur flancs et/ou une autre forme de profil de filetage que ceux de l'autre filet externe (23.2) ou de l'autre filet interne (24.2).

4. Dispositif de pipetage selon une des revendications 1 à 3, dans lequel dans toute la plage d'ajustage du dispositif d'ajustage (5), l'autre filet externe (23.2) s'engrène dans le filet interne (24) fabriqué au moyen de la vis filetée (16) ou le filet externe (23) fabriqué au moyen de l'écrou de broche (17) s'engrène dans l'autre filet interne (24.2).

5. Dispositif de pipetage selon une des revendications 1 à 4, dans lequel la vis filetée (16) ou l'écrou de broche (17) comportent un filet unique et l'autre filet externe (23.2) est raccordé au premier filet externe (23.1) ou l'autre filet interne (24.2) est raccordé au premier filet interne (24.1).

6. Dispositif de pipetage selon une des revendications 1 à 4, dans lequel la vis filetée (16) ou l'écrou de broche (17) comportent plusieurs filets et un premier pas de filetage est le premier filet externe (23.1) ou le premier filet interne (24.1), et un autre pas de filetage est l'autre filet externe (23.2) ou l'autre filet interne (24.2).

7. Dispositif de pipetage selon une des revendications 1 à 6, dans lequel le filet interne (24) est fabriqué par serrage de la vis filetée (16) dans un alésage cylindrique lisse (25) de l'écrou de broche (17) ou le filet externe (23) est fabriqué par serrage d'une vis filetée cylindrique lisse (16) dans l'écrou de broche (17).

8. Dispositif de pipetage selon une des revendications 1 à 7, dans lequel le filet interne (24) est fabriqué par serrage de la vis filetée dans un alésage (25), muni d'épaulements en saillie vers l'intérieur, de l'écrou de broche (17) ou le filet externe (23) est fabriqué par serrage de la vis filetée (16), munie d'épaulements en saillie vers l'extérieur, dans l'écrou de broche (17).

9. Dispositif de pipetage selon une des revendications 1 à 8, dans lequel le filet interne (24) est fabriqué par serrage de la vis filetée (16) dans un écrou de broche (17) muni d'un filet interne partiellement préfabriqué ou le filet externe (23) est fabriqué par serrage de la vis filetée (16) munie d'un filet externe partiellement préfabriqué.

10. Dispositif de pipetage selon une des revendications 1 à 9, dans lequel le filet interne (24) ou le filet externe sont fabriqués par enlèvement de copeaux ou sans enlèvement de copeaux.

11. Dispositif de pipetage selon une des revendications 1 à 10, dans lequel le premier filet externe (23.1), ou le premier filet interne (24.1), est un filet triangulaire et l'autre filet externe (23.2), ou l'autre filet interne (24.2), est un filet trapézoïdal.

12. Dispositif de pipetage selon une des revendications 1 à 11, dans lequel l'écrou de broche (16) au moins dans à zone du filet interne (24) fabriqué au moyen de la vis filetée (16) est en matériau plus souple que la vis filetée (16) au moins dans la zone du filet externe (23) ou dans lequel la vis filetée (16) au moins dans la zone du filet externe (23) fabriqué au moyen de l'écrou de broche (17) est en matériau plus souple que l'écrou de broche (17) au moins dans la zone du filet interne (24).

13. Dispositif de pipetage selon une des revendications 1 à 12, dans lequel l'écrou de broche (17) au moins dans la zone du filet interne (24) fabriqué au moyen de la vis filetée (16) ou la vis filetée (16) au moins dans la zone du filet externe (23) fabriqué au moyen de l'écrou de broche (17) est fabriqué dans un matériau plastique.

14. Dispositif de pipetage selon une des revendications 1 à 13, dans lequel la vis filetée (16) fabriquant le filet interne (24) au moins dans la zone du filet externe (23.1, 23.2) ou l'écrou de broche (17) fabriquant le filet externe (23) est fabriquée au moins dans la zone du filet interne (24) dans un métal.

15. Dispositif de pipetage selon une des revendications 1 à 14, dans lequel le couple d'ajustage de la vis filetée (16) dans l'écrou de broche (17) s'élève au maximum à 50 mNm.

16. Dispositif de pipetage selon une des revendications 1 à 15, **caractérisé en ce que** dans le cas de l'autre filet externe (23.2) de la vis filetée (16) ou de l'autre filet interne (24.2) de l'écrou de broche (17), l'écrou de broche (17) présente dans la hauteur (h) du diamètre externe et/ou du diamètre interne du filet externe (23.2, 23) de la vis filetée (16) dans la direction radiale (R) par rapport à l'axe (A) de la vis filetée (16) une distance (d) par rapport à la vis filetée (16).

17. Dispositif de pipetage selon une des revendications 1 à 16, **caractérisé en ce que** la distance de l'écrou de broche (17) par rapport la vis filetée (16) pour l'autre filet externe (23.2) de la vis filetée (16) ou pour l'autre filet interne (24.2) de l'écrou de broche (17) dans la hauteur (h) du diamètre externe et/ou du diamètre interne du filet externe (23.2, 23) de la vis filetée (16) dans la direction radiale (R) par rapport à l'axe (A) de la vis filetée (16) est supérieure à 0,015 mm.

18. Dispositif de pipetage selon une des revendications 1 à 17, **caractérisé en ce que** la distance de l'écrou de broche (17) par rapport à la vis filetée (16) pour l'autre filet externe (23.2) de la vis filetée (16) ou pour l'autre filet interne (24.2) de l'écrou de broche (17) dans la hauteur (h) du diamètre externe et/ou du diamètre interne du filet externe (23.2, 23) de la vis filetée (16) dans la direction radiale (R) par rapport à l'axe (A) de la vis filetée (16) se situe dans la plage de 0,020 mm à 0,060 mm.
